# EUROPEAN PATENT APPLICATION

(11) **EP 1 767 681 A1**
(43) Date of publication of application: **28.03.2007**
(21) Application number: 05755399.2
(22) Date of filing: 28.06.2005
(51) Int. Cl.: D04H 3/00, D04H 3/16

(54) **SPAN-BONDED NONWOVEN FABRIC**

(30) Priority: 29.06.2004 JP 2004191058; 29.06.2004 JP 2004191059
(71) Applicant: Toyo Boseki Kabushiki Kaisha, Osaka-shi, Osaka 530-8230 (JP)
(72) Inventor: TANAKA, Shigeki c/o TOYO BOSEKI K.K.,Research C.;, Shiga 5200292 (JP); ADACHI, Masataka c/o TOYO BOSEKI K.K.,Research C.;, Shiga 5200292 (JP); YAMAMOTO, Toshiya c/o TOYO BOSEKI K.K.,Res. Centr;, Shiga 5200292 (JP)
(74) Representative: Müller-Boré & Partner Patentanwälte
(86) International application number: PCT/JP2005/011796
(87) International publication number: WO 2006/001439

(57) **Abstract**

The present invention proposes a spunbonded nonwoven fabric which has an excellent low modulus, retains a high elongating property, and has particularly excellent moldability and followability, and also has excellent dimensional stability after molding, and suitable for a backing ground fabric of automobile interior materials.

The present invention pertains to (A) a spunbonded nonwoven fabric consisting of continuous fibers containing aromatic polyester (melting point: Tm1) and aromatic copolyester (a melting point: Tm2=150 degrees centigrade to (Tm 1·20 degrees centigrade)) in an amount of 1 to 15% by weight with respect to the aromatic polyester, wherein the elongation rate of the nonwoven fabric is 20% or more and 100% or less, and the load of elongation of 5% is 1.2 N/50 mm or less per g/m² weight, (B) the spunbonded nonwoven fabric according to the above (A), wherein the aromatic polyester is polybutylene terephthalate, and (C) the spunbonded nonwoven fabric according to the above (A) or (B), wherein the starting temperature of endotherm of an endothermic peak representing the melting point in a temperature raising process of a differential scanning calorimeter is 140 degrees centigrade or higher.

## Description

### FIELD OF THE INVENTION

The present invention relates to a polyester spunbonded nonwoven fabric having a low modulus and excellent elongating properties, and for more detail, to a polyester spunbonded nonwoven fabric which has excellent moldabilities and follow ability as well as excellent dimensional stabilities after molding, and is suitable for a backing ground fabric for automobile interior materials. Furthermore, the present invention relates to a polyester spunbonded nonwoven fabric which is suitable for a backing ground fabric for door trims.

### BACKGROUND OF THE INVENTION

As a backing ground fabric for automobile interior materials, knits such as hosiery and tricot, textures such as shirting, and nonwoven fabrics such as spunbond, and short-fiber nonwoven fabric are widely used. In such applications of automobile interior materials, not only design of itself but also luxury touch-feeling has been desired in recent years. Therefore, it is strongly required to soften the surface layer of the interior materials. When a surface layer of an interior material is softened, the elongating properties and followability of a backing ground fabric have large effects on the finish of the surface layer, namely the appearance of itself through a cushion layer, and therefore the requirements for the functions of a backing ground fabric have become higher as the surfaces are getting softened. Particularly, since door trim sections among the materials for automobile interior often have large projections and depressions, and their deformations during molding are to be large, it is difficult to keep the high qualities of the interior materials for them. On the other hand, since the door trim section is a portion which is frequently visible to consumers and with which consumers often touch directly, the door trim section requires particularly high technologies and qualities. As a backing ground fabric satisfying such requirements, a polyamide long-fiber nonwoven fabric having a low modulus and high elongating properties, i.e., having good moldability is proposed (See, for example, Patent Document 1). However, such a nonwoven fabric has a relatively low modulus and high elongating properties, but it has insufficient dimensional stability after molding; and therefore, it is difficult to maintain its form, and there is a problem that sagging (a phenomenon in which the form changes after molding) is produced and this results in some degradation of its quality after molding.

Patent Document 1: Japanese Laid-open Patent Publication No.2003-113569

Thus, a nonwoven fabric having a low modulus and excellent high elongating properties is disclosed, but a nonwoven fabric suitable for a backing ground fabric of automobile interior materials such as door trims, which has particularly excellent moldability and followability, and also has excellent dimensional stability after molding, has not been obtained yet.

### DISCLOSURE OF THE INVENTION

### Problem to be Solved by the Invention

The present invention has been invented against the background of the problems of the prior arts, and is to propose a spunbonded nonwoven fabric which has a low modulus, a high elongation retaining property, and has excellent moldability and followability, and also has excellent dimensional stability after molding, particularly suitable for a backing ground fabric of automobile interior materials.

### Means for Solving the Problem

The present inventors made earnest investigations in order to solve the above-mentioned problems, and consequently they have completed the present invention. That is, the present invention pertains to: (1) a spunbonded nonwoven fabric consisting of continuous fibers containing aromatic polyester (a melting point: Tm1) and aromatic copolymerized polyester (melting point: Tm2=150 degrees centigrade to (Tm1-20 degrees centigrade)) in an amount of 1 to 15% by weight with respect to the aromatic polyester, wherein the elongation rate of the nonwoven fabric is from 20% or more to 100% or less, and the load of elongation of 5% is 1.2 N/50 mm or less per g/m² weight; (2) the spunbonded nonwoven fabric described in the above (1), wherein the starting temperature of endotherm of an endothermic peak, pointing the melting point in a temperature raising process of a differential scanning calorimeter, is 140 degrees centigrade or higher; (3) a spunbonded nonwoven fabric consisting of continuous fibers, which contains an aromatic polyester unit in an amount of 80% by mol or more, and in which the starting temperature of endotherm of an endothermic peak, pointing the melting point in the temperature raising process of the differential scanning calorimeter, is from 160 to 260 degrees centigrade, wherein the elongation rate of the nonwoven fabric is from 40% or more to 100% or less when the nonwoven fabric is heated and to be at 120 degrees centigrade, and the load of elongation of 5% is 0.2 N/50 mm or less per g/m² weight, (4) the spunbonded nonwoven fabric described in any one of the above (1) to (3), wherein an aromatic polyester is polybutylene terephthalate or polytrimethylene terephthalate; or (5) the spunbonded nonwoven fabric described in any one of the above (1) to (4), having a laminated structure in which the respective layers have different densities each other.

### Effect of the Invention

The spunbonded nonwoven fabric of the present invention can provide a polyester spunbonded nonwoven fabric at a low price, wherein the polyester spunbonded nonwoven fabric has a low modulus, retains high elongating properties, and has excellent moldability and followability, and also has excellent dimensional stability after molding, particularly suitable for a backing ground fabric of automobile interior materials. More specifically, since the spunbonded nonwoven fabric of the present invention is mainly made of polybutylene terephthalate, polytrimethylene terephthalate or so, that has high crystallinity, good thermal stability and a slightly low modulus, in order to improve the thermal formability of itself; by setting a low thermoforming temperature, it can be provided at a low price as a polyester spunbonded nonwoven fabric which has an excellent low modulus, retains a high elongating property, and has particularly excellent moldability and followability, and also has excellent dimensional stability after molding, particularly suitable for door trims in which deformation is larger among backing ground fabrics of automobile interior materials.

### BEST MODE FOR CARRYING OUT THE INVENTION

Hereinafter, the present invention will be described in more detail.

A composition of a fiber composing the nonwoven fabric of the present invention is preferably aromatic polyester (a melting point: Tm1) containing 1 to 15% by weight of aromatic copolyester (a melting point: Tm2=150 degrees centigrade to (Tm1-20 degrees centigrade)).

An aromatic polyester referred to in the invention is preferably a polyester using an aromatic dicarboxylic acid and a diol, such as polyethylene terephthalate, polyethylene naphthalate, polybutylene terephthalate, polytrimethylene terephthalate, polybutylene naphthalate and polycyclohexylenedimethyl terephthalate.

The nonwoven fabric of the present invention preferably has a melting point of a temperature at which the other materials do not deteriorate because it is to be combined with the other materials to be used for automobile interior materials, and in the case this melting point is too high compared to those of the other materials, it is not preferred since there is a possibility that the deterioration of the other materials tends to occur. And, when the nonwoven fabric is deformed and fluidized at not enough high temperature for combining, it is not preferred since the requirements for heat resistance are not enough for. In view of these points, as the example of the most preferred embodiment of the present invention, a polyester, that has a melting point (hereinafter, abbreviated as Tm) of 220 degrees centigrade to 250 degrees centigrade at which the thermoforming property is good and the heat resistance is retained, can be listed.

Further, in order to achieve the object of the present invention, it is desired to have high crystallinity and a slightly low modulus. As a material satisfying all these requirements, polybutylene terephthalate (hereinafter, abbreviated as PBT: Tm1; 228 degrees centigrade) and polybutylene naphthalate (hereinafter, abbreviated as PBN: Tm1; 243 degrees centigrade) are recommended.

A melting point (hereinafter, abbreviated as a Tm2) of aromatic copolyester used in the present invention is preferably 150 degrees centigrade to (Tm1-20 degrees centigrade). When the Tm2 is less than 150 degrees centigrade, it is not preferred because the heat resistance in forming a nonwoven fabric is less, and when the Tm2 is more than (Tm1-20 degrees centigrade), it is not preferred because the adhesion among the fibers is hard to improve. The Tm2 is particularly preferably 155 degrees centigrade to (Tm1-30 degrees centigrade), and furthermore preferably 160 degrees centigrade to (Tm1-40 degrees centigrade).

Aromatic copolyesters of the invention means polyesters formed by copolymerizing aromatic polyesters exemplified as described above with other third component, and, for instance, as the examples of other third component, copolyesters obtained by copolymerization of third components as an acid component such as isophthalic acid, adipic acid, sebacic acid and glutaric acid, and also as a diol component such as diethylene glycol, neopentyl glycol, butane diol/ ethylene glycol. It is possible to obtain a polyester spunbonded nonwoven fabric having flexibility and a strong bonding force because of the following reason by using these copolymerization compounds.

The reason of including the above-mentioned copolymerized aromatic polyester having a melting point Tm2 in the above-mentioned aromatic polyester having a melting point Tm1 of the present invention is as follows. That is, melted polyester passes through a fiber spinning orifice in a state in which the copolymerized aromatic polyester is dispersed well in a matrix of the melted aromatic polyester, and it is assumed that at the contacting interface of the melted polyester before exiting the orifice, the copolymerization between the copolyester and the aromatic polyester proceeds, and if the amount of copolymerized aromatic polyester to be added is small, this copolymerization is completed in a relatively short time and a copolymer is dispersed in the matrix. Then, when the melted polyester is subjected to a large shearing force in the fiber spinning orifice, it is assumed that the copolymer having a low meltviscosity is rejected toward the surface of the fiber spinning orifice wall to form a sheath-core structure.

For this reason, an aromatic polyester and a copolymerized aromatic polyester may be a resin blend (two or more species of polymers are charged in the form of resin and these polymers are mixed in an extruder and the resulting mixture is extruded to be spun), or the copolyester and the aromatic polyester may be copolymerized by kneading and the like in advance before charging resins.

Thus, spun fiber is taken off in web form onto a net while being cooled close to a solidification point, but then in the fiber containing copolymerized polyester, a bonding force at the interface between the fibers in contact with each other is enhanced, and even though the web is subsequently embossed, the strength of the nonwoven fabric is very improved. According to this result, it is conceivable that spun fiber may attain a sheath-core structure and, therefore such an effect as a thermobonding fiber may be developed.

The melting point and a starting temperature of fluidization, which are mean characteristics of resins composing a fiber, remain in slight decrease at this time. That is, the spun fiber exhibits a behavior that may hardly impair the characteristics of the aromatic polyester as the main component. The content of the aromatic copolyester which can develop such an effect is 1 to 15% by weight. When this content is less than 1% by weight, it is not so effective. When the content is more than 15% by weight, it is not preferred since the characteristics of the aromatic polyester, a main component, may be slightly deteriorated.

Thus, the melting point and the starting temperature of the fluidization of the copolymerized polyester are to decrease. In order to simultaneously satisfy heat resistance (it is preferred that a starting temperature of fluidization and the melting point are high) and a shape forming property (the starting temperature of fluidization is +20 degrees centigrade or higher than that of the applications for use, and, at the same time, it is better to be a lower starting temperature of fluidization), the starting temperature of fluidization is preferably 140 degrees centigrade to 240 degrees centigrade, more preferably 160 degrees centigrade to 230 degrees centigrade, and most preferably 190 degrees centigrade to 220 degrees centigrade. In the present invention, a starting temperature of endotherm, which is measured by a differential scanning calorimeter, can be employed as an alternative to the starting temperature of fluidization. When the starting temperature of fluidization is 140 degrees centigrade or lower, it is not preferred since the heat resistance is less. When it is more than 240 degrees centigrade, it is not preferred since the setting property in molding is deteriorated, as well as, since it becomes necessary to carry out heating during forming a nonwoven fabric in a production step of a nonwoven fabric at elevated temperature, there is a problem that it is disadvantageous for energy saving.

The nonwoven fabric of the present invention is preferably a spunbonded nonwoven fabric in which the load of elongation of 5% of the nonwoven fabric is 1.2 N/50 mm or less per g/m² weight in the nonwoven fabric consisting of continuous fibers composed of the above-mentioned polyester. The nonwoven fabric of the present invention is a member which can be requested to have sufficient strength even at a low weight, and it is composed of long fibers. In the nonwoven fabric of short fibers, there is a problem that sufficient strength cannot be provided at a low weight. The nonwoven fabric of short fibers of the present invention can provide sufficient strength even at a low weight since it is to be a spunbonded nonwoven fabric.

The elongation of the spunbonded nonwoven fabric of the present invention in longitudinal and lateral directions is preferably to be 20% or more and 100% or less. In the case where the elongation rate is less than 20%, it is not preferred because the follow ability to the mold shape is less due to the difficulty in elongating when the nonwoven fabric is used as a backing ground fabric, and therefore a desired shape may not be obtained; or the nonwoven fabric may be damaged. When the elongation rate is more than 100%, it is not preferred because a homogeneously reinforcing function of the backing ground fabric is deteriorated, and sagging of the shape may occur. The elongation rate is preferably 25% to 80%, and more preferably 30% to 60%.

On the spunbonded nonwoven fabric of the present invention, it is preferred to secure the followability to the mold shape by reducing the initial resistance in elongation to such a low value that the load of elongation of 5% per g/m² weight is 1.2 N/50 mm or less. When the initial resistance against the elongation rate is large, it is not preferred because the followability to the mold shape is less, and the finished shape becomes poor, and the nonwoven fabric may be damaged. The load of elongation as the initial resistance is preferably 1.0 N/50 mm to 0.4 N/50 mm, and more preferably 0.8 N/50 mm to 0.4 N/50 mm.

The fineness of the single fiber composing the spunbonded nonwoven fabric of the present invention is not particularly limited, but it is preferably 15 dtex or less, and more preferably 1 to 8 dtex in order to provide flexibility, and reinforcing function, and/or insulating function efficiently in an application of a backing ground fabric for automobile interior materials. The bonding form of the fiber composing the spunbonded nonwoven fabric of the present invention is not particularly limited, but embossing is suitable for a thin article requiring strength. Dot processing is preferred for embossing; and plane processing is preferred when the surface smoothness is required. Needle punching is suitable when a thick and bulky article is required.

The thickness of the spunbonded nonwoven fabric of the present invention is not particularly limited; and it is preferred to select a thickness which is optimal in a use site. As for a backing material of a sheet, a thickness of 0.2 mm to 0.5 mm is preferred from the viewpoint of wear resistance and the ability to follow a shape. As for the nonwoven fabric for a door trim, a thickness of 0.3 mm to 1 mm is preferred in order to maintain the molding resin insulating function and the reinforcing function. As for applications of ceiling, a thickness of 0.1 mm to 0.3 mm is preferred since adhesion to a ceiling is emphasized. As for the trunk interior materials, a thickness of 3 mm to 5 mm is preferred since sound insulation and a function to absorb vibrations are required.

Hereinafter, an example of production method of the nonwoven fabric of the present invention will be shown.

It is recommended that polybutylene terephthalate (hereinafter, abbreviated as PBT) having intrinsic viscosity of 1.20 or more and 1.80 or less, and aromatic polyester (PET copolymer) having a melting point of 180 degrees centigrade formed by copolymerizing polyethylene terephthalate and diol of, for example, 30% by mol with respect to polyethylene terephthalate are mixed, and simultaneously dried under vacuum to obtain a mixture having a water content of 0.003% by weight or less and this mixture is subjected to spinning. A preferred water content in the present invention is 0.002% by weight or less. When a drying process is omitted and water is removed through a vent in a spinning step, a method of removing water under high vacuum immediately before and after the mixture is melted in an extruder is recommended.

Next, the melt spinning is performed according to a normal method. As a spinning temperature, a temperature higher than the melting point of polybutylene terephthalate by 15 degrees centigrade to 40 degrees centigrade is recommended. Preferably, a temperature higher than that by 25 degrees centigrade to 35 degrees centigrade is recommended. When a melted polymer is discharged from an orifice, the hole size thereof which can set at a high shearing rate is recommended in the present invention. A discharge rate is preferably optimized so as to become a desired fiber diameter in accordance with a structure formation to increase a shearing rate and a take-off speed. In the present invention, since a preferred fiber diameter is 1 to 8 dtex, a discharge rate per a single hole is preferably set so as to be 0.4 g/min to 3.2 g/min when a take-off speed is 4000 m/min. As a discharging nozzle, many rows of small nozzles may be installed as required, or one nozzle having many holes may be used. Discharged melted streak is divided finely while cooling and taken off. In spunbonding method, melted streak is taken off by an ejector having an aspirator function, and thrown onto a conveying net and spread to make a fiber array random to form a laminated web.

In this time, there may be cases where a fiber makes a delayed recovery within an elastic recovery limit, and the physical properties of the nonwoven fabric are deteriorated. Therefore, in the present invention, a method in which a delayed recovery of the spread and laminated web is immediately suppressed to secure a web form is strongly recommended. Specifically, a method of securing the web form by sandwiching it among the take-off nets, and a method of securing the web form by a pressure roller can be exemplified. The amount of fibers to be thrown is adjusted so as to be desired weight in accordance with the speed of a take-off net. In the case where the number of fibers to be thrown is constant, when the speed of a take-off net is increased, the spread fibers exhibit a tendency in which a probability that the fibers are aligned in the traveling direction (hereinafter, abbreviated as MD) of the net increases. In such a case, by increasing the number of fibers to be thrown, it becomes possible to adjust a random state and productivity is further improved. In a step of forming a take-off web, it is necessary to consider the adjustment of a required thickness.

Next, embossing is continuously or discontinuously applied to a laminated web. In embossing, optimal one of a dot shape, a dot density, or a plane shape is selected as a desired embossing pattern in accordance with a function required on the surface of the nonwoven fabric, and the laminated web is embossed using the optimal one. In the present invention, as an embossing temperature, 180 degrees centigrade to 220 degrees centigrade is proper in PBT, and as a line pressure, a pressure of 20 kN/m to 200 kN/m is proper.

The embossed spunbonded nonwoven fabric of the present invention thus obtained can be provided as-is as a backing ground fabric for automobile interior materials.

In addition, the exemplifications in the present invention are not limited to these examples.

The nonwoven fabric of the present invention particularly preferably has the following constitution in using it for the application of door trims. That is, the present invention may be; (A) a spunbonded nonwoven fabric consisting of continuous fibers, that contains an aromatic polyester unit in an amount 80% by mol or more, and in which the starting temperature of endotherm of an endothermic peak representing the melting point in a temperature raising process of a differential scanning calorimeter is 160 degrees centigrade to 260 degrees centigrade, wherein the elongation of the nonwoven fabric is 40% or more and 100% or less when the nonwoven fabric is heated to 120 degrees centigrade, and the load of elongation of 5% is 0.2 N/50 mm or less per g/m² weight, (B) the spunbonded nonwoven fabric according to the above (A), wherein the aromatic polyester is polybutylene terephthalate or polytrimethylene terephthalate, or (C) the spunbonded nonwoven fabric according to the above (A) or the above (B), having a laminated structure in which the respective layers have different densities.

A composition of a fiber composing the nonwoven fabric of the present invention may be a nonwoven fabric consisting of continuous fibers, which contains an aromatic polyester unit in an amount 80% by mol or more, and in which the starting temperature of endotherm of an endothermic peak representing the melting point in a temperature raising process of a differential scanning calorimeter is 160 degrees centigrade or higher.

The aromatic polyester unit referred to in the invention means a polyester unit of aromatic dicarboxylic acid and diol such as ethylene terephthalate, ethylene naphthalate, trimethylene terephthalate, trimethylene naphthalate, butylene terephthalate, butylene naphthalate and cyclohexylenedimethyl terephthalate.

In the present invention, it is preferred to contain an aromatic polyester unit to become a skeleton of retaining the heat resistance in an amount of 80% by mol or more. When the content of the aromatic polyester is less than 80% by mol, it is not preferred because of low heat resistance. This content is preferably 90% by mol and most preferably 100% by mol.

In the embodiments, the nonwoven fabric of the present invention preferably has a melting point of a temperature at which other materials do not deteriorate because it is to be combined with other materials to be used as automobile interior materials, and when this melting point is too higher than that of other materials, it is not preferred since there is a possibility that deterioration tends to occur. And, when the nonwoven fabric is deformed and fluidized at too low temperature for combining, it is not preferred since the requirements for heat resistance are not enough for. That is, examples of the most preferred embodiment in the present invention include polytrimethylene terephthalate (hereinafter, abbreviated as PTT: Tm; 221 degrees centigrade), polytrimethylene naphthalate (hereinafter, abbreviated as PTN: Tm; 238 degrees centigrade), polybutylene terephthalate (hereinafter, abbreviated as PBT: Tm; 228 degrees centigrade) and polybutylene naphthalate (hereinafter, abbreviated as PBN: Tm; 243 degrees centigrade) as aromatic polyester having a melting point (hereinafter, abbreviated as Tm) of 220 degrees centigrade to 250 degrees centigrade at which a thermoforming property is good and the heat resistance can be retained and slightly low modulus.

In the present invention, the nonwoven fabric is preferably a nonwoven fabric consisting of continuous fibers, in which the starting temperature of endotherm of an endothermic peak representing the melting point in a temperature raising process of a differential scanning calorimeter is 160 degrees centigrade to 260 degrees centigrade. When the starting temperature of endotherm is less than 160 degrees centigrade, it is not preferred because sagging or peeling off may occur due to a plastic deformation. When it is more than 260 degrees centigrade, a setting property in molding may be deteriorated. Since it becomes necessary to carry out heating while forming a nonwoven fabric in a production step of a nonwoven fabric at elevated temperature, there is a problem that it is disadvantageous for energy saving and it is not preferred. A starting temperature of endotherm of the present invention is preferably 170 degrees centigrade to 220 degrees centigrade, and more preferably 180 degrees centigrade to 210 degrees centigrade.

In addition, Tm of a fiber constituting the present invention is not particularly limited but it is preferably 220 degrees centigrade to 250 degrees centigrade since a starting temperature of melting can thereby be reduced, and therefore a temperature of heating during forming a nonwoven fabric can be reduced, and it is advantageous for energy saving.

In the present invention, it is also possible to set the Tm of aromatic polyester having a high melting point at 220 degrees centigrade to 250 degrees centigrade, and to provide a slightly low modulus by copolymerizing the above-mentioned aromatic polyester with other third component to such an extent that a composition in which the starting temperature of endotherm of an endothermic peak representing the melting point in a temperature raising process of a differential scanning calorimeter is 160 degrees centigrade to 260 degrees centigrade can be met. As other third component, copolymers of third components as an acid component such as isophthalic acid, adipic acid, sebacic acid and glutaric acid, and polyesters formed by copolymerizing third components as a diol component such as diethylene glycol, neopentyl glycol, butane diol/ ethylene glycol can be exemplified. And, the above-mentioned aromatic polyester may be copolymerized with copolymerized aromatic polyester or aliphatic polyester after the copolymerized aromatic polyester or the aliphatic polyester is mixed and the mixture is melted.

In addition, in the present invention, it is possible to impart various functions by adding other resin components, a deodorant anti-fungus agent, a reodorant, a fungicide, a coloring agent, a fragrance, a retarder, a plasticizer, and a compatibilizing agent to the extent of not deteriorating performance.

The nonwoven fabric of the present invention is preferably a spunbonded nonwoven fabric characterized in that when the nonwoven fabric is heated to 120 degrees centigrade, the elongation of the nonwoven fabric is 40% or more and 100% or less, and the load of elongation of 5% is 0.2 N/50 mm or less per g/m² weight in the nonwoven fabric consisting of continuous fibers composed of the above-mentioned polyester. In the nonwoven fabric of the present invention, it is one of main purposes to propose a nonwoven fabric useful as a backing ground fabric of door trims and the like. In door trims, a method, in which a door trim is prepared by injection molding that a melted resin is injected from a back side of a surface material, a cushion material, and a laminate of adhesive film/nonwoven fabric put in a die, is normal. In this time, it is necessary that the backing ground fabric is deformed following a shape by injection of the melted resin while preventing the damages to the cushion material and surface material by the melted resin and molded.

The backing ground fabric preferably has low initial resistance to elongation and tension as an elongating property in heating in order to readily deform following a die when resin is squeezed into a die. In the present invention, it was found that the elongating property can be achieved by limiting the elongation in heating the nonwoven fabric to 120 degrees centigrade, and the load of elongation of 5%. That is, in the present invention, it is preferred that when the nonwoven fabric is heated to 120 degrees centigrade, elongations in longitudinal and lateral directions are 40% or more and 100% or less, and when the nonwoven fabric is elongated by 5%, loads in longitudinal and lateral directions are 0.2 N/50 mm or less per g/m² in weight. When the elongation of the nonwoven fabric is less than 40% in heating the nonwoven fabric to 120 degrees centigrade, it is not preferred because the nonwoven fabric cannot conform to the shape of a die, and breaks, floating or wrinkles may occur in a backing ground fabric. When the elongation rate is more than 100%, it is not preferred because sagging, slack or wrinkles tend to easily occur. And, when the load of elongation of 5% in heating the nonwoven fabric to 120 degrees centigrade is more than 0.2 N/50 mm per g/m² in weight, it is not preferred because the nonwoven fabric becomes hard to conform to the shape of a die, and floating tends to occur even though the elongation rate is 40% or more. The elongation of the present invention is preferably 45 to 90%, and more preferably 50 to 80%. And, the load of elongation of 5% per g/m² in weight of the present invention is preferably 0.10 N/50 mm to 0.001 N/50 mm, and more preferably 0.05 N/50 mm to 0.005 N/50 mm.

As the most preferred embodiment in the present invention for door trims, a laminated structure of a dense layer and a coarse layer can be recommended. The dense layer can interfere with leakage of a melted resin squeezed from the nonwoven fabric side into a die into a surface material and a cushion material of resin, and the coarse layer can help diffuse a melted resin squeezed into a die and improve a shape forming property. As the most preferred embodiment in the present invention, for example, a spunbonded nonwoven fabric, which is formed by applying an entanglement treatment by a water jet to a spunbonded nonwoven fabric with an apparent density of 0.1 g/cm³ using a low-profile cross-sectional yarn of 0.5 dtex as a dense layer, and a spunbonded nonwoven fabric with an apparent density of 0.05 g/cm³ using a deformed cross-sectional yarn of 3.4 dtex as a coarse layer, can be exemplified. Weight of each layer is not particularly limited, but, for example, the weight of the dense layer is preferably 20 g/m² to 80 g/m², and the weight of the coarse layer is preferably 50 g/m² to 100 g/m². The fineness of a fiber is also not particularly limited, but preferably, the fineness is to be 0.5 dtex to 3 dtex in the dense layer and 1 dtex to 10 dtex in the coarse layer.

The fineness of a single fiber composing the spunbonded nonwoven fabric of the present invention is not particularly limited, but it is preferably 15 dtex or less, and more preferably 0.5 to 8 dtex in order to provide flexibility and a reinforcing function, and/or an insulating function efficiently in an application of a backing ground fabric for automobile interior materials. The cross-sectional profile of a single fiber composing the spunbonded nonwoven fabric of the present invention is not particularly limited, and a circular cross section or a deformed cross section can be used, but a low-profile cross section can be recommended in order to provide flexibility and a reinforcing function, and/ or an insulating function efficiently in an application of a backing ground fabric for automobile interior materials. And, when the bulkiness is required, a hollow cross section or a deformed cross section can be recommended.

A bonding form of a fiber composing the spunbonded nonwoven fabric of the present invention is not particularly limited, but in order to prevent the penetration of melted resin, a dense structure is preferred and, for example, embossing is suitable. Dot processing is preferred for embossing and plane processing is preferred if the smoothness of the surface is required. Needle punching is suitable if a thick and bulky article is required.

A thickness of the spunbonded nonwoven fabric of the present invention is not particularly limited, and it is preferred to select a thickness which is optimal for the site of usage. As for the nonwoven fabric for door trims, a thickness of 0.3 mm to 1 mm is preferred in order to maintain a molding resin insulating function and a reinforcing function. As for applications of ceiling, a thickness of 0.1 mm to 0.3 mm is preferred since adhesion to a ceiling is emphasized. As for trunk interior materials, a thickness of 3 mm to 5 mm is preferred since sound insulation and a function to absorb vibrations are required.

The weight of the spunbonded nonwoven fabric of the present invention is not particularly limited, and it is preferred to select weight which is optimal for the site of usage. As for the nonwoven fabric for door trims, weight of 30 g/m² to 100 g/m² is preferred in order to maintain a molding resin insulating function and a reinforcing function. As for applications of ceiling, weight of 15 g/m² to 30 g/m² is preferred since adhesion to a ceiling is emphasized. As for trunk interior materials, weight of 100 g/m² to 300 g/m² is preferred since sound insulation and a function to absorb vibrations are required.

Hereinafter, an example of production method of the nonwoven fabric of the present invention will be shown.

It is recommended that polybutylene terephthalate (hereinafter, abbreviated as PBT) having intrinsic viscosity of 1.20 to 1.80 or polytrimethylene terephthalate having intrinsic viscosity of 0.8 to 1.60, and aromatic polyester (PET copolymer) having the melting point of 180 degrees centigrade formed by copolymerizing polyethylene terephthalate and diol of, for example, 30% by mol with respect to polyethylene terephthalate are mixed, and simultaneously dried under vacuum to obtain a mixture having a water content of 0.003% by weight or less, and this mixture is subjected to spinning. A preferred moisture percentage in the present invention is 0.002% by weight or less. When a drying process is omitted, and water is removed through a vent in a spinning step, a method of removing water under high vacuum immediately, before and after the mixture is melted in an extruder, is recommended.

Next, melt spinning is performed by using a normal method. As a spinning temperature, a temperature higher than the melting point of polybutylene terephthalate by 15 degrees centigrade to 40 degrees centigrade is recommended. Preferably, a temperature higher than that by 25 degrees centigrade to 35 degrees centigrade is recommended. When a melted polymer is discharged from an orifice, a hole size which can set a shearing rate at high can be recommended in the present invention. It is particularly preferred because it is possible to attain a pseudo sheath-core structure by increasing a shearing rate. The shearing rate is preferably 500/sec to 5000/sec, and more preferably 1500/sec to 4000/sec. When the shearing rate is more than 10000/sec, it is not preferred since an abnormal fluidization is generated, and the strength of a fiber is deteriorated. A discharge rate is preferably optimized so as to become a desired fiber diameter in accordance with a structure formation to increase a shearing rate and a take-off speed. In the present invention, since a preferred fineness is 0.5 to 8 dtex, a discharge rate per a single hole is preferably set so as to be 0.2 g/min to 3.2 g/min when a take-off speed is 4000 m/min. As a discharging nozzle, many rows of small nozzles may be installed as required, or one nozzle having many holes may be used. Discharged melted streak is divided finely while cooling and taken off. In spunbonding method, melted streak is taken off by an ejector having an aspirator function, and thrown onto a conveying net and spread to make a fiber array random, and laminated to form a web.

In this time, there may be cases where a fiber makes a delayed recovery within an elastic recovery limit, the ability of the nonwoven fabric to maintain the form is deteriorated, and a handling property changes for the worse. Therefore, in the present invention, a method in which a delayed recovery of the spread and laminated web is immediately suppressed to secure a web form is strongly recommended. Specifically, a method of securing the web form by sandwiching it among the take-off nets, and a method of securing the web form by a pressure roller can be exemplified. Thereby, the ability of the nonwoven fabric to maintain the form of itself is significantly improved. The amount of fibers to be thrown is adjusted so as to be desired weight in accordance with the speed of a take-off net.

In the case where the number of fibers to be thrown is constant, when the speed of a take-off net is increased, the spread fibers exhibit a tendency in which a probability that the fibers are aligned in the traveling direction (hereinafter, abbreviated as MD) of the net increases. In such a case, by increasing the number of fibers to be thrown, it becomes possible to adjust a random state and productivity is further improved. In a step of forming a take-off web, it is necessary to consider adjustment of a required thickness.

Next to a laminated web, an entangled bonding treatment such as needle punching and/or embossing and/or a water jet entanglement treatment is continuously or discontinuously applied. In needle punching, it is preferred to optimize a needle number density or a needle shape in accordance with a density and the intensity of entanglement. In embossing, optimal one of a dot shape, a dot density, or a plane shape is selected as a desired embossing pattern in accordance with a function required on the surface of the nonwoven fabric, and the laminated web is embossed using the optimal one. In the present invention, as an embossing temperature, a temperature of 180 degrees centigrade to 220 degrees centigrade is proper in PTT and PBT, and as a line pressure, a pressure of 20 kN/m to 200 kN/m is proper. The water jet entanglement treatment is applied to one side or both sides as required. A water jet pressure is properly 2 MPa to 10 MPa, and when this pressure is too low, an entangled bonding effect is less, and when this pressure is too high, some damages to fiber may occur, and therefore these cases are not preferred. In the present invention, water jet entanglement is an embodiment particularly suitable for combining a laminated structure of a dense layer and a coarse layer into one.

The spunbonded nonwoven fabric of the present invention thus obtained, to which needle processing and/or embossing and/or a water jet entanglement treatment is applied, can be provided as-is as a backing ground fabric for automobile interior materials. In the present invention, it is possible to carry out processing of providing agents giving function such as a deodorant anti-fungus, a reodorant, a fungicide, coloring, a fragrance and a retarder to the extent of not deteriorating performance at any stage from producing a resin to processing into a molded article to commercialize. In addition, the exemplifications in the present invention are not limited to these examples.

### Examples

Next, the present invention will be described specifically by way of examples and comparative examples, but the characteristics in the examples and comparative examples were measured by the following method.

### <Melting point>

A temperature of an endothermic peak of an endothermic phenomenon occurring due to melting of a sample when a temperature of a sample is raised from 20 degrees centigrade to 300 degrees centigrade at a temperature raising speed of 20 degrees centigrade /min of a differential scanning calorimeter is taken as the melting point.

### <Starting temperature of endotherm>

A temperature at which an endothermic pattern generated in measuring the above melting point starts. The tangent line is drawn between the endothermic pattern and the base line, and it is defined as the temperature at which an endothermic pattern starts from the tangent line.

### <Fineness of Fibers>

A fiber fineness is measured according to JIS L 1015 (1999).

### < Weight of nonwoven fabric>

Weight of a nonwoven fabric is measured according to JIS L 1906 (2000).

### <Thickness of nonwoven fabric>

A thickness of a nonwoven fabric is measured according to JIS L 1906 (2000).

### <Tensile strength and elongation of nonwoven fabric>

Tensile strength and elongation of a nonwoven fabric are measured according to JIS L 1906 (2000).

### <Load of elongation of 5% per weight of nonwoven fabric>

A load in providing elongation distortion of 5% was measured from a distortion-load curve measured according to JIS L 1906 (2000).

### <Tensile strength and elongation in a 120 degrees centigrade atmosphere of nonwoven fabric>

Tensile strength and elongation are measured in the atmosphere of 120 degrees centigrade heating according to JIS L 1906 (2000).

### <Load of elongation of 5% per grammage in a 120 degrees centigrade atmosphere of nonwoven fabric>

A load in providing elongation distortion of 5% was measured from a distortion-load curve measured in the atmosphere of 120 degrees centigrade heating according to JIS L 1906 (2000).

### (Example 1)

Together with a small amount of catalyst, 100 parts by weight of terephthalic acid (hereinafter, abbreviated as TPA), 40 parts by weight of ethylene glycol (hereinafter, abbreviated as EG), and 15 parts by weight of neopentyl glycol (hereinafter, abbreviated as NPG) were fed, and aromatic copolyester A (hereinafter, abbreviated as COPES-A) having the melting point of 178 degrees centigrade, and intrinsic viscosity of 0.780 was obtained by pelletizing the product formed by conducting transesterification and polymerization according to a normal method. Together with a small amount of catalyst 100 parts by weight of TPA and 70 parts by weight of 1,4-butanediol (hereinafter, abbreviated as BG) were fed, and PBT-A having the melting point of 230 degrees centigrade, and intrinsic viscosity of 1.205 was obtained by palletizing the product formed by conducting transesterification and polymerization according to a normal method.

Into a rotary type vacuum drier, 10 parts by weight of COPES-A and 90 parts by weight of PBT-A were charged, and mixed and dried (dried up to a moisture percentage of 0.002% by weight), and the dried mixture was subjected to spinning. The mixture was spun at a single hole discharge rate of 0.7 g/min through a nozzle of 0.20 mm in orifice diameter φ at a spinning temperature of 260 degrees centigrade, and the spun mixture was aspirated and taken off at the yarn speed of 4100 m/min by an ejector placed at a position 0.8 m below the nozzle while being cooled with air of 20 degrees centigrade having an air velocity of 0.5 m/sec from 50 mm below the nozzle. A fiber bundle was thrown while spreading onto the surface of a take-off net moving at the speed of 50 m/min at a position 1.5 m below a nozzle to laminate. A web laminated on the surface of the net was immediately pre-pressed by a temporary pressure roller, and taken up on a take-off roller. Next, the taken-up nonwoven fabric was embossed at 210 degrees centigrade and at the line pressure of 50 kN/m by a dot-embossing roller with 4 mm dot pitches to obtain a spunbonded nonwoven fabric.

A thickness of the obtained embossed spunbonded nonwoven fabric was 0.17 mm and the weight was 25 g/m². In terms of machine direction (MD), the load of elongation of 5% per weight was 0.5 N/5 cm, the tensile strength was 40 N/5 cm, and the elongation rate was 25%, and in terms of crosswise direction (CD), the load of elongation of 5% per weight was 0.4 N/5 cm, the tensile strength was 30 N/5 cm, and the elongation rate was 28%. The fiber fineness of a fiber composing the nonwoven fabric was 1.7 dtex, the melting point was 226 degrees centigrade, a starting temperature of fluidization was 198 degrees centigrade, and most of the contacting points among the fibers were bonded.

The performance of the obtained spunbonded nonwoven fabric applied to a ceiling material was evaluated. An adhesive layer/an olefin layer/an adhesive layer/a glass fiber layer/a thermal and acoustic insulating layer/a glass fiber layer/an adhesive layer/a surface layer were laminated on the spunbonded nonwoven fabric, and this was placed in a die, and thermoformed at 130 degrees centigrade to form a ceiling material, and this ceiling material was bonded to a ceiling of a car body. The obtained ceiling material had no floating, sagging, break, ooze of resin and projection and depression, and conformed to the shape of the ceiling and had a ceiling of high quality. That is, Example 1 satisfies all of the requirements of the inventions, and exhibits excellent performance as a backing ground fabric in ceiling materials.

### (Example 2)

An embossed spunbonded nonwoven fabric was obtained by following the same procedure as in Example 1 except for using 5 parts by weight of COPES-A and 95 parts by weight of PBT. The thickness of the obtained embossed spunbonded nonwoven fabric was 0.17 mm and the weight was 25 g/m². In terms of machine direction (MD), the load of elongation of 5% per weight was 0.6 N/5 cm, the tensile strength was 39 N/5 cm and the elongation rate was 24%, and in terms of crosswise direction (CD), the load of elongation of 5% per weight was 0.3 N/5 cm, the tensile strength was 26 N/5 cm and the elongation rate was 27%. The fiber fineness of a fiber composing the nonwoven fabric was 1.7 dtex, the melting point was 229 degrees centigrade, the starting temperature of fluidization was 204 degrees centigrade, and most of the contacting points among the fibers were bonded.

The performance of the obtained spunbonded nonwoven fabric was evaluated in the same manner as in Example 1. The obtained ceiling material had no floating, sagging, break, ooze of resin, and projection and depression, and conformed to the ceiling shape and had a ceiling of high quality. That is, Example 2 satisfies all of the requirements of the inventions and exhibits excellent performance as a backing ground fabric in ceiling materials.

### (Comparative Example 1)

An embossed spunbonded nonwoven fabric was obtained by following the same procedure as in Example 1 except for using 100 parts by weight of PBT. The thickness of the obtained embossed spunbonded nonwoven fabric was 0.17 mm and weight was 25 g/m². In terms of machine direction (MD), the load of elongation of 5% per weight was 0.4 N/5 cm, the tensile strength was 27 N/5 cm and the elongation rate was 20%, and in terms of crosswise direction (CD), the load of elongation of 5% per weight was 0.2 N/5 cm, the tensile strength was 19 N/5 cm and the elongation rate was 25%. The fiber fineness of a fiber composing the nonwoven fabric was 1.7 dtex, the melting point was 230 degrees centigrade, the starting temperature of fluidization was 213 degrees centigrade, and the half or more of the contacting points among the fibers were bonded to each other.

The performance of the obtained spunbonded nonwoven fabric was evaluated for a ceiling material in the same manner as in Example 1. The obtained ceiling material had no floating, sagging, break, ooze of resin, and projection and depression, but there was a portion of the corner where the quality of the backing ground of the nonwoven fabric was poor. The obtained spunbonded nonwoven fabric was slightly less in conforming to the ceiling shape, and had a ceiling of its allowable quality. That is, Comparative Example 1 satisfies strength, and the elongation characteristics of the nonwoven fabric of the present invention except for being different in a fiber composition, but the performance as a backing ground fabric in ceiling materials was slightly inferior to the nonwoven fabric of the present invention.

### (Comparative Example 2)

An embossed spunbonded nonwoven fabric was obtained by following the same procedure as in Example 1 except for using 95 parts by weight of nylon 6 and 5 parts by weight of nylon 610. The thickness of the obtained embossed spunbonded nonwoven fabric was 0.15 mm and weight was 25 g/m². In terms of machine direction (MD), the load of elongation of 5% per weight was 0.4 N/5 cm, the tensile strength was 37 N/5 cm and the elongation rate was 92%, and in terms of crosswise direction (CD), the load of elongation of 5% per weight was 0.2 N/5 cm, the tensile strength was 24 N/5 cm and the elongation rate was 100%. The fiber fineness of a fiber composing the nonwoven fabric was 1.7 dtex.

The performance of the obtained spunbonded nonwoven fabric was evaluated for a ceiling material in the same manner as in Example 1. The obtained ceiling material had no floating, break, ooze of resin, and projection and depression, but there was partially sagging. The obtained spunbonded nonwoven fabric was slightly less in conforming to the ceiling shape and had a ceiling of the quality of slightly out of the allowable range. That is, Comparative Example 2 satisfies strength and elongation characteristics of the nonwoven fabric of the present invention except for being different in a fiber composition, but the performance as a backing ground fabric in ceiling materials was slightly inferior to the nonwoven fabric of the present invention.

### (Comparative Example 3)

Together with a small amount of catalyst, 70 parts by weight of TPA, 30 parts by weight of isophthalic acid (hereinafter, abbreviated as IPA), and 65 parts by weight of EG were fed, and copolyester (hereinafter, abbreviated as COPES-B) having the melting point of 152 degrees centigrade was obtained by conducting transesterification and polymerization by using a normal method. An embossed spunbonded nonwoven fabric was obtained by following the same procedure as in Example 1 except for using 25 parts by weight of COPES-B and 75 parts by weight of PBT. The thickness of the obtained embossed spunbonded nonwoven fabric was 0.15 mm and weight was 25 g/m². In terms of machine direction (MD), the load of elongation of 5% per weight was 0.8 N/5 cm, the tensile strength was 46 N/5 cm and the elongation rate was 12%, and in terms of crosswise direction (CD), the load of elongation of 5% per weight was 0.6 N/5 cm, the tensile strength was 37 N/5 cm and the elongation rate was 18%. In addition, the starting temperature of fluidization of the fiber was 137 degrees centigrade and the starting temperature of deformation became low.

The performance of the obtained spunbonded nonwoven fabric was evaluated for ceiling materials in the same manner as in Example 1. With the obtained ceiling material, floating and projections/depressions of a corner and breaks of the backing ground fabric occurred. The obtained spunbonded nonwoven fabric was less in conforming to the ceiling shape and had a ceiling of the quality deviating from the allowable range. That is, as for Comparative Example 3, its performance as a backing ground fabric for ceiling materials was inferior to the nonwoven fabric of the present invention.

### (Comparative Example 4)

An embossed spunbonded nonwoven fabric was obtained by following the same procedure as in Example 1 except for using 97 parts by weight of PET having intrinsic viscosity of 0.63 and 3 parts by weight of COPES-B. The thickness of the obtained embossed spunbonded nonwoven fabric was 0.14 mm and weight was 25 g/m². In terms of machine direction (MD), the load of elongation of 5% per weight was 1.4 N/5 cm, the tensile strength was 58 N/5 cm and the elongation rate was 12%, and in terms of crosswise direction (CD), the load of elongation of 5% per weight was 1.2 N/5 cm, the tensile strength was 44 N/5 cm and the elongation rate was 16%. In addition, the starting temperature of fluidization of the fiber was 149 degrees centigrade and the starting temperature of deformation was a problem-free temperature. The performance of the obtained spunbonded nonwoven fabric was evaluated for a ceiling material in the same manner as in Example 1. With the obtained ceiling material, floating and projections/depressions of a corner occurred, and the elongation of the backing ground fabric became insufficient. The obtained spunbonded nonwoven fabric was less in conforming to the ceiling shape, and had a ceiling of the quality deviating from the allowable range. That is, as for Comparative Example 4, its performance as a backing ground fabric for ceiling materials was inferior to the nonwoven fabric of the present invention.

### (Comparative Example 5)

A spunbonded nonwoven fabric was obtained by following the same procedure as in Comparative Example 4 except for conducting only pre-embossing in place of embossing. The thickness of the obtained spunbonded nonwoven fabric was 0.9 mm and weight was 25 g/m². In terms of machine direction (MD), the load of elongation of 5% per weight was 0.05 N/5 cm, the tensile strength was 11 N/5 cm and the elongation rate was 143%, and in terms of crosswise direction (CD), the load of elongation of 5% per weight was 0.04 N/5 cm, the tensile strength was 8 N/5 cm and the elongation rate was 165%. In addition, the starting temperature of fluidization of the fiber was 149 degrees centigrade and the starting temperature of deformation was a problem-free temperature.

The performance of the obtained spunbonded nonwoven fabric was evaluated for a ceiling material in the same manner as in Example 1. With the obtained ceiling material, floating and projections/depressions of a corner, sagging, breaks of the backing ground fabric and ooze of an adhesive into the backing ground fabric occurred. The obtained spunbonded nonwoven fabric was less in conforming to the ceiling shape, and had a ceiling of the quality deviating from the allowable range. That is, as for Comparative Example 5, even if the elongation of the backing ground fabric is enhanced, its performance as a backing ground fabric for ceiling materials was inferior to the nonwoven fabric of the present invention.

As is apparent from the results of Examples 1 to 2 and Comparative Examples 1 to 5, the spunbonded nonwoven fabric of the present invention can attain a polyester spunbonded nonwoven fabric which has an excellent low modulus, retains a high elongating property, and has particularly excellent moldability and followability, and also has excellent dimensional stability after molding, particularly suitable for a backing ground fabric of automobile interior materials by having a constitution in which a spunbonded nonwoven fabric consists of continuous fibers of aromatic polyester (a melting point: Tm1) containing aromatic copolyester (a melting point: Tm2=150 degrees centigrade to (Tm1-20 degrees centigrade) in an amount of 1 to 15% by weight with respect to the aromatic polyester, and the elongation rate of the nonwoven fabric is 20% or more and 100% or less, and the load of elongation of 5% is 1.2 N/50 mm or less per g/m² weight.

### (Example 3)

Together with a small amount of catalyst, 100 parts by weight of terephthalic acid (hereinafter, abbreviated as TPA), 40 parts by weight of ethylene glycol (hereinafter, abbreviated as EG), and 15 parts by weight of neopentyl glycol (hereinafter, abbreviated as NPG) were fed and aromatic copolyester A (hereinafter, abbreviated as COPES-A) having the melting point of 178 degrees centigrade and intrinsic viscosity of 0.780 was obtained by palletizing the product formed by conducting transesterification and polymerization by using a normal method.

Together with a small amount of catalyst, 100 parts by weight of TPA and 70 parts by weight of 1,4-butanediol (hereinafter, abbreviated as BG) were fed, and PBT having a melting point of 230 degrees centigrade and intrinsic viscosity of 1.205 was obtained by pelletizing the product formed by conducting transesterification and polymerization by using a normal method.

Into a rotary type vacuum drier, 10 parts by weight of COPES-A and 90 parts by weight of PBT were charged, and mixed and dried (dried up to a water content of 0.002% by weight), and the dried mixture was subjected to spinning. The mixture was spun at a single hole discharge rate of 0.7 g/min through a nozzle of 0.23 mm in orifice diameter φ at the spinning temperature of 260 degrees centigrade, and the spun mixture was aspirated and taken off at the yarn speed of 4100 m/min by an ejector placed at a position 0.8 m below the nozzle while being cooled with air of 20 degrees centigrade having an air velocity of 0.5 m/sec from 50 mm below the nozzle. A fiber bundle was thrown while spreading onto the surface of a take-off net moving at the speed of 50 m/min at a position 1.5 m below a nozzle to laminate. A web laminated on the surface of the net was immediately pre-pressed by a temporary pressure roller and taken up on a take-off roller.

Next, a taken-up nonwoven fabric was embossed at 210 degrees centigrade and at the line pressure of 50 kN/m by a dot-embossing roller with 6 mm dot pitches to obtain a spunbonded nonwoven fabric. The thickness of the obtained embossed spunbonded nonwoven fabric was 0.7 mm and weight was 115 g/m². In the atmosphere of 120 degrees centigrade, in terms of machine direction (MD), the tensile strength was 30 N/50 mm, the elongation rate was 75%, and the load of elongation of 5% per weight was 0.02 N/50 mm, and in terms of crosswise direction (CD), the tensile strength was 25 N/50 mm, the elongation rate was 81%, and the load of elongation of 5% per weight was 0.01 N/50 mm. The fiber fineness of a fiber composing the nonwoven fabric was 1.7 dtex, the melting point was 226 degrees centigrade, the starting temperature of endotherm was 189 degrees centigrade, and entangled bonding among the fibers was composed of a dot by embossing. The performance of the obtained spunbonded nonwoven fabric applied to door trim materials was evaluated. An adhesive layer/a cushion layer (urethane foam)/an adhesive layer/a surface layer were laminated on the spunbonded nonwoven fabric, and this was placed in a die and polypropylene colored raw material resin of 200 degrees centigrade was injected by a normal method to prepare a door trim.

The obtained door trim surface material portion had no floating, sagging, break, wrinkle, projection and depression and transverse leakage, and there was also no coze of resin to the surface of the nonwoven fabric, which was examined peeling off a surface layer from a cushion layer, and a resin layer and a nonwoven fabric layer were adequately closely bonded, and then the obtained door trim was of good quality. That is, Example 3 satisfies all of the requirements of the inventions and exhibits excellent performance as a backing ground fabric of door trims.

### (Example 4)

Together with a small amount of catalyst, 100 parts by weight of TPA and 70 parts by weight of BG were fed, and the transesterification of the mixture was carried out by using a normal method and then to this, 0.3 parts by weight of polytetramethylene glycol (hereinafter, abbreviated as PTMG) having a molecular weight of 1000 was added, and the resulting mixture was stirred, polymerized and pelletized to obtain aromatic copolyester B (hereinafter, abbreviated as COPES-B) having a melting point of 226 degrees centigrade and intrinsic viscosity of 1.580.

The obtained COPES-B was subjected to spinning after drying. The dried COPES-B was spun at a single hole discharge rate of 0.3 g/min through a nozzle with a slit, an orifice of which was 0.04 mm in width and 0.40 mm in length at a spinning temperature of 260 degrees centigrade, and the spun mixture was aspirated and taken off at the yarn speed of 4000 m/min by an ejector placed at a position 0.8 m below the nozzle while being cooled with air of 20 degrees centigrade having an air velocity of 0.5 m/sec from 50 mm below the nozzle. A fiber bundle was thrown while spreading onto the surface of a take-off net moving at the speed of 45 m/min at a position 1.5 m below a nozzle to laminate. A web laminated on the surface of the net was immediately pre-pressed by a temporary pressure roller and taken up on a take-off roller. The weight of the obtained nonwoven fabric (B1) was 40 g/m² and the fiber fineness of a single fiber was 0.75 dtex on average.

The dried PBT obtained in Example 3 was used and spun at a single hole discharge rate of 1.5 g/min through a nozzle of 0.30 mm in orifice diameter φ at the spinning temperature of 260 degrees centigrade, and the spun PBT was aspirated and taken off at the yarn speed of 4600 m/min by an ejector placed at a position of 0.8 m below the nozzle while being cooled with air of 20 degrees centigrade having an air velocity of 0.5 m/sec from 50 mm below the nozzle. A fiber bundle was thrown while spreading onto the surface of a take-off net moving at the speed of 65 m/min at a position 1.5 m below a nozzle to laminate. A web laminated on the surface of the net was immediately pre-pressed by a temporary pressure roller and taken up on a take-off roller. The weight of the obtained nonwoven fabric (B2) was 80 g/m² and the fiber fineness of a single fiber was 3.3 dtex.

Next, the nonwoven fabrics B1 and B2 were laminated and placed on a conveyer with the speed of 50 m/min, and this laminate was subjected to an entanglement treatment by a water jet pressurized to 3 MPa from a jet nozzle having nozzle holes of 0.15 mm in diameter with 8 mm pitches and dried, and then it was embossed at 180 degrees centigrade and at the line pressure of 20 kN/m by a plane roller to obtain a laminated spunbonded nonwoven fabric. A thickness of the obtained spunbonded nonwoven fabric was 0.9 mm and weight was 120 g/m². In the atmosphere of 120 degrees centigrade, in terms of machine direction (MD), the tensile strength was 26 N/50 mm, the elongation rate was 85%, and the load of elongation of 5% per weight was 0.01 N/50 mm, and in terms of crosswise direction (CD), the tensile strength was 21 N/50 mm, the elongation rate was 92%, and the load of elongation of 5% per weight was 0.007 N/50 mm. The fiber finenesses of a fiber composing the nonwoven fabric was 0.75 dtex and 3.3 dtex, the melting points were 226 degrees centigrade and 226 degrees centigrade, the starting temperatures of endotherm were 181 degrees centigrade and 197 degrees centigrade, respectively, and entangled bonding among the fibers was bonded by water jet entanglement. The performance of the obtained laminated spunbonded nonwoven fabric applied to a door trim material was evaluated in the same manner as in Example 3.

The obtained door trim surface material portion had no floating, sagging, break, wrinkle, projection and depression and transverse leakage, and there was also no ooze of resin to the surface of the nonwoven fabric, wherein the surface layer was peeled off from the cushion layer in order to be examined, and the resin layer and the nonwoven fabric layer were adequately closely bonded, and then the obtained door trim was of good quality. That is, Example 4 satisfies all of the requirements of the inventions and exhibits excellent performance as a backing ground fabric of a door trim.

### (Example 5)

Together with a small amount of catalyst, 100 parts by weight of TPA and 60 parts by weight of trimethylene glycol (hereinafter, abbreviated as TG) were fed, and PTT having a melting point of 221 degrees centigrade and intrinsic viscosity of 1.310 was obtained by conducting polymerization and pelletizing after transesterification by using a normal method.

After drying the obtained PTT, it was spun at a single hole discharge rate of 0.25 g/min through a nozzle with a slit used in Example 4 at the spinning temperature of 255 degrees centigrade and the spun PTT was aspirated and taken off at the yarn speed of 4000 m/min by an ejector placed at a position 0.8 m below the nozzle while being cooled with air of 20 degrees centigrade having an air velocity of 0.5 m/sec from 50 mm below the nozzle. A fiber bundle was thrown while spreading onto the surface of a take-off net moving at the speed of 45 m/min at a position 1.5 m below a nozzle to laminate. A web laminated on the surface of the net was immediately pre-pressed by a temporary pressure roller and taken up on a take-off roller. The weight of the obtained nonwoven fabric (C1) was 40 g/m² and the fiber fineness of a single fiber was 0.65 dtex on average.

The nonwoven fabrics C1 and B2 obtained in Example 4 were laminated and a water jet entanglement treatment and embossing were applied to this laminate in the same manner as in Example 4 to obtain a laminated spunbonded nonwoven fabric. The thickness of the obtained laminated spunbonded nonwoven fabric was 0.8 mm and the weight was 120 g/m². In the atmosphere of 120 degrees centigrade, in terms of machine direction (MD), the tensile strength was 29 N/50 mm, the elongation rate was 78%, and the load of elongation of 5% per weight was 0.02 N/50 mm, and in terms of crosswise direction (CD), the tensile strength was 24 N/50 mm, the elongation rate was 87%, and the load of elongation of 5% per weight was 0.01 N/50 mm. The fiber finenesses of a fiber composing the nonwoven fabric was 0.65 dtex and 3.3 dtex, the melting points were 221 degrees centigrade and 226 degrees centigrade, the starting temperatures of endothermic were 182 degrees centigrade and 189 degrees centigrade, respectively, and entangled bonding among the fibers was bonded by water jet entanglement. The performance of the obtained laminated spunbonded nonwoven fabric applied to a door trim material was evaluated in the same manner as in Example 3.

The obtained door trim surface material portion had no floating, sagging, break, wrinkle, projection and depression and transverse leakage, and there was also no ooze of resin to the surface of the nonwoven fabric wherein the surface layer was peeled off from the cushion layer in order to be examined, and the resin layer and the nonwoven fabric layer were adequately closely bonded, and then the obtained door trim was of good quality. That is, Example 5 satisfies all of the requirements of the inventions and exhibits excellent performance as a backing ground fabric of a door trim.

### (Comparative Example 6)

An embossed spunbonded nonwoven fabric was obtained by following the same procedure as in Example 3 except for using PET having intrinsic viscosity of 0.68, spinning at a single hole discharge rate of 2.5 g/min through a nozzle of 0.35 mm in orifice diameter φ and at the take-off speed of 4800 m/min at the spinning temperature of 285 degrees centigrade and embossing at dot spacing of 5 mm at 240 degrees centigrade and at the line pressure of 50 kN/m. The thickness of the obtained embossed spunbonded nonwoven fabric was 0.7 mm and the weight was 110 g/m². In the atmosphere of 120 degrees centigrade, in terms of machine direction (MD), the tensile strength was 192 N/50 mm, the elongation rate was 38%, and the load of elongation of 5% per weight was 0.81 N/50 mm, and in terms of crosswise direction (CD), the tensile strength was 114 N/50 mm, the elongation rate was 67%, and the load of elongation of 5% per weight was 0.33 N/50 mm. A fiber diameter of a fiber composing the nonwoven fabric was 5.2 dtex, the melting point was 256 degrees centigrade, the starting temperature of endotherm was 237 degrees centigrade, and entangled bonding among the fibers was bonded by a dot by embossing. The performance of the obtained embossed spunbonded nonwoven fabric applied to a door trim material was evaluated in the same manner as in Example 3.

The obtained door trim surface material portion had floating, wrinkles, and projections and depressions, and there was also ooze of resin to the surface of the nonwoven fabric, wherein the surface layer was peeled off from the cushion layer in order to be examined, around an injection section. A resin layer and a nonwoven fabric layer were adequately closely bonded, but the obtained door trim was of extremely poor quality. That is, since Comparative Example 6 satisfies few requirements of the inventions, it exhibits extremely poor performance as a backing ground fabric of a door trim.

### (Comparative Example 7)

Together with a small amount of catalyst, 100 parts by weight of TPA, 30 parts by weight of isophthalic acid, 70 parts by weight of EG, and 5 parts by weight of diethylene glycol (hereinafter, abbreviated as DEG) were fed, and aromatic copolyester (COPES-C) was obtained by conducting transesterification and polymerization by using a normal method. The obtained COPES-C had the melting point of 184 degrees centigrade, intrinsic viscosity of 0.61 and the starting temperature of melting of 137 degrees centigrade.

An embossed spunbonded nonwoven fabric was obtained by following the same procedure as in Example 3 except for using COPES-C. A thickness of the obtained embossed spunbonded nonwoven fabric was 0.6 mm and the weight was 115 g/m². In the atmosphere of 120 degrees centigrade, in terms of machine direction (MD), the tensile strength was 24 N/50 mm, the elongation rate was 95%, and the load of elongation of 5% per weight was 0.006 N/50 mm, and in terms of crosswise direction (CD), the tensile strength was 18 N/50 mm, the elongation rate was 101%, and the load of elongation of 5% per weight was 0.004 N/50 mm. The fiber fineness of a fiber composing the nonwoven fabric was 1.2 dtex, the melting point was 184 degrees centigrade, the starting temperature of endotherm was 137 degrees centigrade, and entangled bonding among the fibers was bonded by embossing. The performance of the obtained spunbonded nonwoven fabric was evaluated in the same manner as in Example 3. The obtained door trim surface material portion had significant resin leakage, wrinkles, and projections and depressions. Ooze of resin to the surface of the nonwoven fabric, wherein the surface layer was peeled off from the cushion layer in order to be examined, was remarkable. A resin layer and a nonwoven fabric layer were adequately closely bonded, but the obtained door trim was of extremely poor quality. That is, since Comparative Example 7 had a low starting temperature of fluidization out of requirements of the inventions, Comparative Example 7 had significant resin leakage and could not be used as a backing ground fabric of a door trim.

### (Comparative Example 8)

A spunbonded nonwoven fabric pre-pressed and taken off, which was obtained by following the same procedure as in Example 3 except for using PBT obtained in Example 3 and spinning at a single hole discharge rate of 0.30 g/min and at a take-off speed of 2500 m/min, was next needle punched with pene number 60 to obtain a needle-punched spunbonded nonwoven fabric.

The thickness of the obtained embossed spunbonded nonwoven fabric was 0.9 mm and the weight was 115 g/m². In the atmosphere of 120 degrees centigrade, in terms of machine direction (MD), the tensile strength was 20 N/50 mm, the elongation rate was 135%, and the load of elongation of 5% per weight was 0.006 N/50 mm, and in terms of crosswise direction (CD), the tensile strength was 15 N/50 mm, the elongation rate was 151%, and the load of elongation of 5% per weight was 0.002 N/50 mm. The fiber fineness of a fiber composing the nonwoven fabric was 1.2 dtex, the melting point was 226 degrees centigrade, the starting temperature of endotherm was 197 degrees centigrade, and entangled bonding among the fibers was fixed by entanglement by needle punching. The performance of the obtained needle punched spunbonded nonwoven fabric was evaluated with the spunbonded nonwoven fabric applied to a door trim material in the same manner as in Example 3.

The obtained door trim surface material portion had floating, sagging, and wrinkles. There was not ooze of resin to the surface of the nonwoven fabric, wherein the surface layer was peeled off from the cushion layer in order to be examined, a resin layer and a nonwoven fabric layer were adequately closely bonded, and the obtained door trim was of slightly poor quality. That is, since Comparative Example 8 did not satisfy a part of requirements of the inventions, it exhibits inadequate and poor performance as a backing ground fabric of a door trim.

As is apparent from the results of Examples 3 to 5 and Comparative Examples 6 to 8, the spunbonded nonwoven fabric of the present invention can provide a polyester spunbonded nonwoven fabric most suitable for door trims in which deformation is larger among the backing ground fabrics of automobile interior materials by forming a spunbonded nonwoven fabric consisting of continuous fibers, which contains an aromatic polyester unit in an amount 80% by mol or more, and in which the starting temperature of endotherm of an endothermic peak representing the melting point in a temperature raising process of a differential scanning calorimeter is 160 degrees centigrade or higher, wherein the elongation of the nonwoven fabric is 40% or more and 100% or less when the nonwoven fabric is heated to 120 degrees centigrade, and the load of elongation of 5% is 0.2 N/50 mm or less per g/m² weight.

### INDUSTRIAL APPLICABILITY

Since the spunbonded nonwoven fabric of the present invention improves a thermoforming property by using polybutylene terephthalate having high crystallinity, good thermal stability that the melting point is 220 degrees centigrade or higher and a slightly low modulus as a main component, by setting a low thermoforming temperature, it can be provided at a low price as a polyester spunbonded nonwoven fabric which has an excellent low modulus, retains a high elongating property, and has particularly excellent moldability and followability, and also has excellent dimensional stability after molding, and suitable for a backing ground fabric of automobile interior materials. Further, the spunbonded nonwoven fabric of the present invention can contribute to industry by a large amount since it can be provided as a nonwoven fabric useful for applications other than automobile interior materials by adjusting its weight and thickness to a desired one.

## Claims

1. A spunbonded nonwoven fabric consisting of continuous fibers containing aromatic polyester (melting point: Tm1) and aromatic copolyester (melting point: Tm2=150 degrees centigrade to (Tm1-20 degrees centigrade) in an amount of 1 to 15% by weight with respect to the aromatic polyester, wherein an elongation rate of the nonwoven fabric is 20% or more and 100% or less, and the load of elongation of 5% is 1.2 N/50 mm or less per g/m² weight.

2. The spunbonded nonwoven fabric according to claim 1, wherein the melting point of an endothermic peak representing the melting point in a temperature raising process of a differential scanning calorimeter is 140 degrees centigrade or higher.

3. A spunbonded nonwoven fabric consisting of continuous fibers, which contains an aromatic polyester unit in an amount of 80% by mol or more, and in which the starting temperature of endotherm of an endothermic peak representing the melting point in a temperature raising process of a differential scanning calorimeter is 160 degrees centigrade to 260 degrees centigrade, wherein the elongation rate of the nonwoven fabric is 40% or more and 100% or less when the nonwoven fabric is heated to 120 degrees centigrade, and the load of elongation of 5% is 0.2 N/50 mm or less per g/m² weight.

4. The spunbonded nonwoven fabric according to any one of claims 1 to 3, wherein aromatic polyester is polybutylene terephthalate or polytrimethylene terephthalate.

5. The spunbonded nonwoven fabric according to any one of claims 1 to 4, comprising having a laminated structure in which the respective layers have different densities from each other.
